# EUROPEAN PATENT SPECIFICATION

(11) **EP 1 609 301 B1**
(45) Date of publication and mention of the grant of the patent: **02.12.2009**
(21) Application number: 04758678.9
(22) Date of filing: 31.03.2004
(51) Int. Cl.: H04N 1/00

(54) **ENSURING ACCURATE MEASUREMENTS FOR SOFT PROOFING SYSTEM**
SICHERSTELLUNG PRÄZISER MESSUNGEN FÜR EIN SOFT-PROOF-SYSTEM
GARANTIR DES MESURES EXACTES POUR UN SYSTEME D'EPREUVAGE A L'ECRAN

(30) Priority: 02.04.2003 US 459935 P
(43) Date of publication of application: 28.12.2005
(73) Proprietor: Eastman Kodak Company, Rochester NY 14650-2201 (US)
(72) Inventor: EDGE, Christopher, J. c/o EASTMAN KODAK COMPANY, Rochester, New York 14650-2201 (US); FROST, Jonathan, A. c/o EASTMAN KODAK COMPANY, Rochester, New York 14650-2201 (US)
(74) Representative: Weber, Etienne Nicolas
(86) International application number: PCT/US2004/009926
(87) International publication number: WO 2004/091190

(56) References cited:
- EP-A- 0 556 133
- WO-A-00/75635
- US-A- 5 739 809
- US-A- 5 889 929
- US-A- 6 157 735
- US-A1- 2003 048 945

## Description

### TECHNICAL FIELD

The invention relates to color imaging and, more particularly, to soft proofing systems.

### BACKGROUND

Soft proofing refers to a proofing process that makes use of a display device rather than a printed hard copy. Traditionally, color proofing techniques have relied on hard copy proofing, where proofs are printed and inspected to ensure that the images and colors on the print media look visually correct. For instance, color characteristics can be adjusted and successive hard copy prints can be examined in a hard proofing process. After determining that a particular proof is acceptable, the color characteristics used to make the acceptable proof can be reused to mass-produce, e.g., on a printing press, large quantities of print media that appear visually equivalent to the acceptable proof.

Soft proofing is desirable for many reasons. For instance, soft proofing can eliminate or reduce the need to print hard copies on media during the proofing process. Moreover, soft proofing may allow multiple proofing specialists to proof color images from remote locations simply by looking at display devices. With soft proofing, there is no need to print and deliver hard copy proofs to remote reviewers. Thus, soft proofing can be faster and more convenient than hard copy proofing. Moreover, soft proofing can reduce the cost of the proofing process. For these and other reasons, soft proofing is highly desirable.

Realizing a high quality soft proofing system, however, has proven to be very difficult. In particular, the inability to accurately render colors of proofing quality on the display devices has generally limited the effectiveness of soft proofing. Color management tools and techniques have been developed to improve the accuracy of color matching between the outputs of different devices. However, even with color management tools, accurate color rendering of proofing quality continues to be challenging.
Document US-6 157 735 discloses a dual-beam spectrophotometer as means of tracking the calibration status of a measurement device, perform renormalization of measurements automatically. Document US-5 889 929 discloses a system whereby software in a PC or in a printer tracks the ID of a display. The display is calibrated i.e. profiled, and the profile info is used to obtain an optimal match from RGB on display to the CMYK of the printed image.

One of the challenges to successful soft proofing has proven to be the accuracy and consistency of the measurement devices used for measuring the output - of a color display system. Existing measurement devices often have errors that typically exceed 2 ΔE. While very adequate for "draft document quality," this magnitude of error is not acceptable for high quality soft proofing. Furthermore, unlike measurement devices designed for measuring reflective media, which typically utilize a very stable white titanium reference plaque to ensure ongoing calibration, emissive measurement devices have no common means of retaining calibration. Standard instructions for such devices often advise the customer to send the device back to the manufacturer for routine re-calibration of the instrument. This lack of accuracy and inconvenience pertaining to calibration of the measurement device is a barrier to effective soft proofing.

### SUMMARY

In general, the invention is directed to providing accurate output measurement and calibration in the context of soft proofing systems that incorporate one or more features to promote controlled viewing conditions. An administrator controls the soft proofing system by limiting or restricting access to images unless a viewing station meets one or more acceptable viewing conditions. In accordance with an embodiment of the invention, one of the viewing conditions requires that a display device associated with the viewing station has been calibrated with a measurement device that is known to support calibration of the viewing station to a maximum magnitude of error, i.e., a minimum degree of accuracy. The viewing conditions also may require that the calibration has been performed recently, i.e., no more than a configurable period of time prior to an image viewing session.

The viewing conditions can be specified by the administrator and associated with individual images. Then, when an image is sent to a viewing station, the ability to view the image can be restricted until the specified viewing conditions have been met at that viewing station. With controlled viewing conditions, the soft proof reviewers can obtain more uniform output. In this manner, the system provides safeguards to ensure a controlled viewing environment in which the proof images viewed at different viewing stations have consistent and acceptable color accuracy.

The viewing-conditions may operate in a-manner analogous to password protection algorithms. In password-protected files, the data cannot be accessed until a password has been correctly entered. In a similar manner, the invention can restrict the ability to view an image until viewing conditions have been met. In response to an attempt to open or render an image file at the viewing station, viewing software may monitor or automatically query as to whether the specified viewing conditions are satisfied.

If the viewing conditions are satisfied, the viewing software directs an image to be displayed according to the image data. However, if the viewing conditions are not satisfied, the viewing software may restrict access and/or instruct the user to take steps necessary to satisfy the required viewing conditions. In this manner, the viewing software prevents a user from viewing an image when the viewing conditions are not met, and thereby reduces the likelihood that a user will rely on an image with color inaccuracy for proofing purposes.

The invention may comprise techniques for ensuring accurate measurement for a proofing system. The techniques may make use of a first computer that specifies one or more viewing conditions for an image, a viewing station that displays the image subject to the viewing conditions, and a measurement device that has been calibrated, e.g., by personnel associated with the administrator or a provider of the soft proofing system. The techniques ensure that relevant colors measured on a display device of the viewing station measure the same as though they were measured by a reference measurement device to an accuracy of+/-1 delta E (ΔE) or better.

In addition, the techniques may make use of measurement correction software which compensates for any remaining errors in the measurement device. In some embodiments, the viewing conditions may be specified and maintained by software running on the viewing station such that the first computer and the viewing station are integrated. The measurement correction software may function externally to the measurement device and is available for use in the event that built-in calibration options for the measurement device do not permit adequate error correction. In this case, the measurement correction software provides added compensation to ensure that the calibration measurements obtained with the measurement device are accurate to a sufficient degree. The measurement device may refer to either a stand-alone measurement device that communicates with a viewing station via a communication protocol, such as RS-232; IEEE 1394; or USB, or the combination of a measurement device and associated driver software running on a computer associated with the viewing station.

Some measurement devices, however, may require communication of measurement information through a software component provided by the measurement device manufacturer rather than directly from the measurement device itself as device output. The latter method is commonly used to permit software-based calculations, corrections, or calibration for the measurement device. Whether the measurement device is hardware only or a combination of hardware and software, the correction made by measurement correction software in the viewing stations may be applied to the measurement data obtained from the measurement device if the measurement device does not permit adequate support for calibration.

In one embodiment, the invention provides a soft proofing system comprising a first computer that specifies viewing conditions of an image, a viewing station that displays the image subject to the viewing conditions, and a measurement device that calibrates the viewing station. The viewing conditions include a condition that the measurement device is a measurement device known to support calibration of the viewing station to at least a maximum magnitude of error.

In another embodiment, the invention provides a method comprising receiving image data and viewing conditions, calibrating a viewing station using a measurement device, and restricting display of an image on the viewing station according to the image data when at least one of the viewing conditions is not satisfied. The viewing conditions include a condition that the measurement device is a measurement device known to support calibration of the viewing station to less than or equal to a maximum magnitude of error.

In an added embodiment, the invention provides a computer-readable medium comprising instructions to cause a processor to receive image data and viewing conditions and restrict display of an image on a viewing station according to the image data when the viewing conditions are not satisfied. The viewing conditions include a condition that the viewing station be calibrated with a measurement device that is a measurement device known to support calibration of the viewing station to less than or equal to maximum magnitude of error.

In another embodiment, the invention provides a viewing station comprising a viewing station that displays images, a measurement device that calibrates the viewing station, and a measurement correction module that corrects calibration information from the measurement device to correct gray balance and white point errors and errors in linearity.

Various aspects of the invention may be implemented in hardware, software, firmware, or any combination thereof. If implemented in software, the invention may be directed to a computer-readable medium carrying program code that, when executed, performs one or more of the methods described herein.

The invention can provide a number of advantages. For example, the invention allows increased administrative control over the soft proofing process. This added control can better ensure that the images viewed at different viewing stations appear substantially equivalent when viewed by a user. Accurate and equivalent color rendering is imperative for the realization of a high quality and effective soft proofing system in which all reviewers view substantially the same output. If reviewers are examining different output, the effectiveness of soft proofing can be undermined. Thus, the invention can facilitate an improved soft proofing system by ensuring that the images rendered at different viewing stations appear visually equivalent. Further, the administrative control can provide a safeguard to ensure that color specialists at viewing stations do not analyze incorrect renditions of color images.
According to the present invention, there is provided a soft proofing system according to claim 1 and a method according to claim 5.

### BRIEF DESCRIPTION OF THE DRAWINGS

FIG. 1 illustrates an exemplary soft proofing system according to an embodiment of the invention.

FIG. 2 is simplified block diagram of a soft proofing system according to an embodiment of the invention.

FIGS. 3-5 illustrate block diagrams of exemplary data structures that may be used to implement various aspects of the invention.

FIGS. 6 and 7 are block diagrams of exemplary implementations of viewing stations.

FIGS. 8 and 9 are flow diagrams illustrating soft proofing techniques according to embodiments of the invention.

FIGS.-1.0-12 are exemplary renditions-on-display screens at viewing stations implementing various aspects of the invention.

FIG. 13 is another flow diagram illustrating a soft proofing technique according to an embodiment of the invention.

FIG. 14 is another exemplary rendition on a display screen at a viewing station implementing various aspects of the invention.

FIG. 15 is another flow diagram illustrating a soft proofing technique according to an embodiment of the invention.

FIG. 16 is another exemplary rendition on display screen at viewing station implementing various aspects of the invention.

FIG. 17 is another flow diagram illustrating a soft proofing technique according to an embodiment of the invention.

FIG. 18 is a flow diagram illustrating another soft proofing technique according to the invention in which the use of a certified measurement device to calibrate a viewing station is verified.

### DETAILED DESCRIPTION

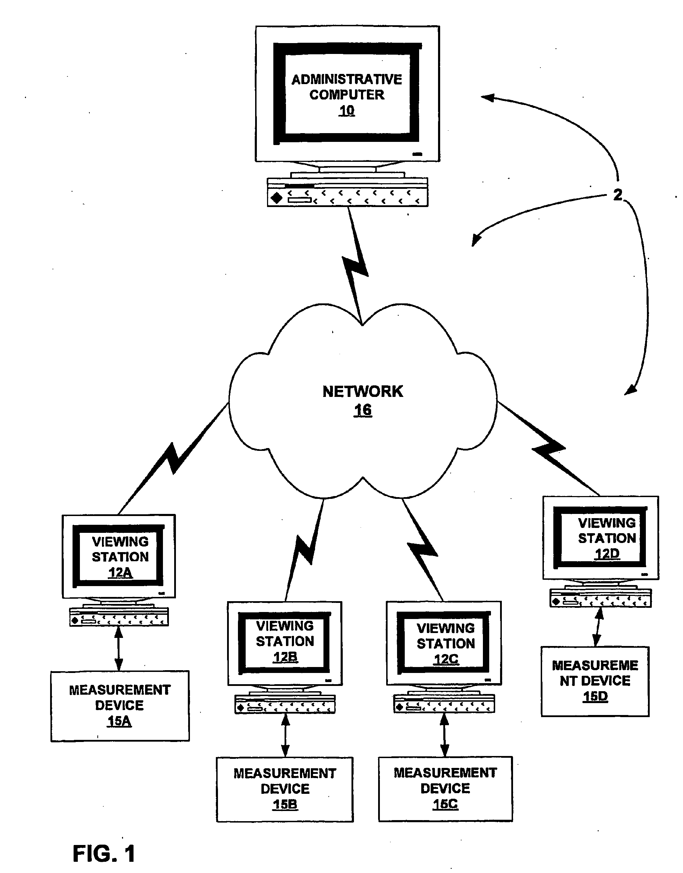

FIG. 1 illustrates an exemplary soft proofing system 2. Soft proofing system 2 may implement one or more aspects of the invention to realize more accurate color rendering and color matching in a soft proofing process. Soft proofing system 2 includes an administrative computer 10. Administrative computer 10 can be thought of as a server computer for soft proofing system 2. Administrative computer 10 may serve images to viewing stations 12A-12D (hereafter, "viewing stations 12"). Alternatively, viewing stations 12 may obtain images from an archive associated with administrative computer 10, or from a dedicated image server. Each of viewing stations 12 may include a display device, a host computer to drive the display device, and a respective one of a plurality of measurement device 15A-15D (hereafter, "measurement devices 15") for use in calibrating the color output response of the viewing station.

In accordance with an embodiment of the invention, measurement devices 15 are selected such that they are known to support calibration of a viewing station 12 to less than or equal to a maximum magnitude of error. A proofing system administrator may, in effect, certify measurement devices 15 for use within soft proofing system 2 based on the known accuracy of the measurement devices, which also may be subject to periodic calibration to ensure continued accuracy. Measurement devices 15 may, for example, be calibrated by the administrator of the soft proofing system 2 or designated personnel such that relevant colors measured on display devices of respective viewing stations 12 measure the same as though they were measured by a reference measurement device to an accuracy of +/-1 delta E (ΔE) or better. As examples, in some embodiments, each of measurement devices 15 may be a densitometer, colorimeter, or spectrophotometer.

Color specialists inspect the proof images presented at viewing stations 12, and may provide feedback by marking or highlighting the images and returning marked-up copies to an administrator associated with administrative computer 10 or other users within soft proofing system 2. The feedback may specify changes in color, size, or other characteristics of the image to render the image suitable for high volume printing. Upon receiving feedback, an administrator or other user may implement changes to the image. Once the administrator and the reviewers associated with viewing stations 12 reach agreement on the appearance of the color proof image, the image can be printed via a printing press or another high quality printing device.

Administrative computer 10 may be directly coupled to viewing stations 12, possibly forming a local area network (LAN). Alternatively, administrative computer 10 may be coupled to viewing stations 12 via a wide area network or a global computer network 16 such as the Internet. Measurement devices 15 may be coupled to respective viewing stations 12 via serial connections, network connections, wireless connections, or other types of connections. In addition, each of measurement devices 15 may include a software component that runs on respective viewing stations 12, either as a communication application that communicates with the respective measurement device 15 or simply a device driver that drives communication with the respective measurement device 15 via the operating systems associated with viewing stations 12.

As described in greater detail below, an image served from administrative computer 10 may have one or more associated viewing conditions. The administrator may assign the viewing conditions to individual images, groups of images, or all images viewed at a particular viewing station 12 to better control the visual accuracy of the output viewed by reviewers associated with viewing stations 12. The ability to -view the image can be limited or restricted at the viewing stations 12 when the viewing conditions have not been met. An automated process, running on viewing stations 12 or administrative computer 10, may aid the administrator by automatically determining whether viewing conditions have been met at the viewing stations. In this manner, the invention can provide better assurances that the images rendered at viewing stations 12 are more representative of the original image, and that viewing stations 12 produce more uniform colorimetric output.

Exemplary viewing conditions the requirement that viewing station 12 must be calibrated with a "certified" measurement device, i.e., a measurement device known to by the administrator support calibration of viewing station 12 to less than or equal to a maximum magnitude of error. Viewing conditions also may include the requirement that viewing station 12 must be calibrated with a certified measurement device within a maximum amount of time prior to viewing an image. In other words, this viewing conditions would require recent calibration, and prevent use of the viewing station 12 if calibration was performed too long ago. Other exemplary viewing conditions include the requirement for an minimum amount of warm-up time for the display device between power on and viewing of a particular image, specific illuminant conditions surrounding the display device of the viewing station, application of a particular sharpening function, to be applied to the image by a rendering device for presentation on the display device, or any other viewing condition that may affect the uniform and accurate rendition of the image on viewing station 12.

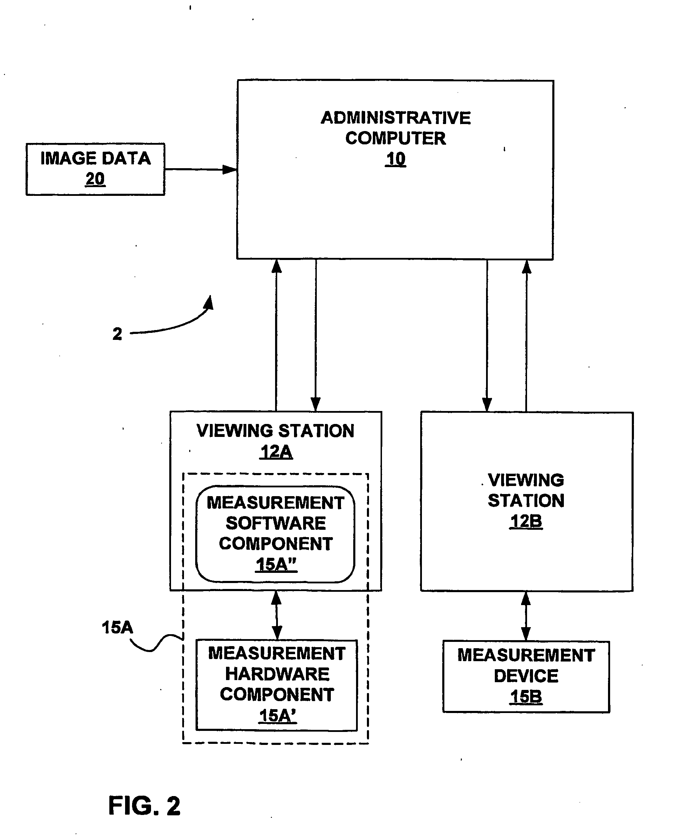

FIG. 2 is simplified block diagram illustrating a portion of system 2. As shown in FIG. 2, administrative computer 10 is coupled to viewing stations 12A and 12B (hereafter 12). As described above, each of viewing stations 12 is coupled to an associated measurement device 15A and 15B (hereafter 15), respectively, for use in calibrating the color output response of the viewing station.

The measurement devices 15 may be stand-alone measurement devices, as illustrated by measurement device 15B. In this case, measurement device 15B may implement a communication protocol via a standard interface such as RS-232, IEEE 1394 or USB in order to calibrate a viewing station 12. For example, measurement device 15B may provide calibration measurements to an operating system of viewing station 12B that supports color correction.

Alternatively; the measurement devices 15 may include both a hardware component and a software component that runs on the respective viewing station, as illustrated by measurement device 15A. In particular, measurement device 15A comprises a measurement hardware component 15A' and a measurement software component 15A". Measurement software component 15A" may function either as a communication application that communicates with measurement hardware component 15A' or simply a device driver that drives communication with measurement device 15A via the operating system associated with viewing station 12A. Running measurement software component 15A" on viewing station 12A permits software-based calculations, corrections, or calibration for measurement device 15A.

Image data 20 can be loaded into administrative computer 10 by an administrator or an automated administrative process. In general, the term "administrator" refers to a user that operates and controls administrative computer 10, although that user may be assisted by an automated administrative process. Any person may be the administrator, but for effective soft proofing, it is advantageous to have an administrator that has color imaging expertise. Exemplary administrators may include a proofing technician, a press technician, a graphic artist, advertisement agency personnel, or a color specialist. The administrator, in effect, takes "ownership" of an image, and exerts some degree of control over the manner in which the image may be reproduced by viewing stations 12. In this manner, the administrator can better ensure consistent and uniform output among the viewing stations 12 so that the viewers are able to view images with substantially identical color characteristics.

Administrative computer 10 may include color management software that conditions or adjusts image data 20 so that it can be accurately rendered at viewing stations 12. For example, administrative computer 10 may apply color correction to images for presentation on particular viewing stations 12 using source and destination profiles, such as ICC profiles. For example, administrative computer 10 may rely on individual destination profiles for individual viewing stations 12. Also, administrative computer 10 may include authoring software for creating the imagery. Alternatively, imagery can be authored by other persons and uploaded to administrative computer 10 or an image archive managed by the administrative computer. The administrator can control the ability of viewing station 12 to render the image by specifying one or more viewing conditions.

As mentioned above, one exemplary viewing condition requires that a display device associated with the respective viewing station 12 be last calibrated within a specified amount of time by a certified measuring device known to support calibration of viewing station 12 to less than or equal to a maximum magnitude of error. When the image is sent to viewing stations 12, the ability to view the image may be restricted until the specified viewing conditions have been met In this manner, improved color accuracy can be provided between the image produced by administrative computer 10 and the corresponding images viewed by viewing stations 12. A variety of additional viewing conditions are described herein for purposes of illustration.

In one specific implementation, for example, when administrative computer 10 receives image data 20, generalized conversions, including raster image processing (RIP) and conversion to a standard red-green-blue (RGB) color space can be performed by administrative computer 10. In operation, the administrator may define a proof simulation within soft proofing system 2. For example, an image can be designated for a specific cyan-magenta-yellow-black (CMYK) proof simulation. In that case, the administrator can choose a specific International Color Consortium (ICC) profile for virtual proofing.

The CMYK simulation can be set by the administrator, using password access. Non-administrators may be able to view and confirm which color simulation was chosen for the job, but may not be allowed to modify the choice. This arrangement provides enhanced administrator control of the simulations. In particular, viewing stations 12 can be configured so that individual reviewers are unable to adjust the selected simulation. Alternatively, viewing stations 12 may permit entry of an adjustment, but only in conjunction with a notification that the displayed image may not conform to the original image prepared by the administrator. For example, the notification may indicate that the image displayed by viewing station 12 may not be relied upon as a "contract" proof, unless the reviewer adheres to the proof simulation chosen by the administrator.

A list of CMYK simulations may reside on administrative computer 10 in the form of ICC device links (CMYK to RGB) generated from a source CMYK profile. The source CMYK profile can accurately characterize the-proofing condition to be simulated. Different standard destination RGB color space information may also reside on administrative computer 10. For example, the administrator may choose the destination RGB space as Adobe RGB (also known as SMPTE-240), which is commonly utilized in software applications such as Adobe Photoshop, commercially available from Adobe Systems Inc. of San Jose, California.

The white point can be set to D50 rather than the default white point, which is commonly D65. Choosing the white point of D50 is advantageous because it can better ensure that there will be no confusion in interpretation of the profile. In particular, some different ICC based systems may interpret the white point differently if the white point is not D50.

The administrator can also select one or more additional viewing conditions for the image to be proofed. Administrative computer 10 can then send an image along with the viewing conditions applicable to the image to one or more viewing stations 12, either automatically or in response to specific requests from the viewing stations 12. The viewing conditions may be included within an image file, or sent separately. In either case, the ability to view the image at viewing stations 12 depends on whether the viewing conditions have been met.

Additional conversions of the RGB data can be performed at each viewing station 12 via local hardware or software in the viewing station 12. In other words, each viewing station 12 may perform a color matching technique to convert from standard RGB (e.g., Adobe RGB) to local RGB for the specific display device associated with that viewing station 12. The local software can also analyze the viewing conditions specified by the administrator. If the viewing conditions have not been met, the local software in viewing station 12 restricts the ability to view the image, and may instruct the user how to remedy the viewing conditions. Once the viewing conditions have been met at the viewing station, the local software allows the image to be displayed and viewed on an unrestricted basis on viewing station 12.

System 2 (FIGS. 1 and 2) has been described as performing general CMYK to RGB conversions in administrative computer 10 and then performing specific RGB to RGB conversions in viewing stations 12. However, the invention is not necessarily limited in that respect. Rather, these conversions may be applied solely in the viewing stations 12, or even solely in administrative computer 10. In the latter case, viewing stations 12 may communicate device specific information to administrative computer 10 so that the proper conversions can be made. Although many details of the invention are described in the context of one specific implementation of the various conversion processes, the invention is not necessarily limited to the manner in which these conversions take place or the location where the conversions take place.

U.S. Patent Application Publication 20020167528, entitled "Correction Techniques for Soft Roofing," describes one specific conversion process that can yield accurate color matching results. In that case, image data of a hard copy CMYK image is converted from CMYK coordinates to XYZ coordinates, and the XYZ coordinates are then transformed to X'Y'Z' coordinates. The transformed X'Y'Z' coordinates can then be converted to RGB coordinates for presentation on a display device for soft proofing. To transform device-independent coordinates, a white point and chromatic colors can be separately corrected.

As described in the aforementioned application, the bifurcated transformation process can yield very accurate color matching results. The described process includes obtaining a white point correction for a display device, obtaining a chromatic correction for the display device, and then generating corrected color coordinates based on the white point and chromatic corrections. Also, the use of correction matrices can further improve color matching accuracy. These techniques, or other color matching techniques can be implemented along with the administrative control techniques described herein to yield a soft proofing system that has improved color accuracy.

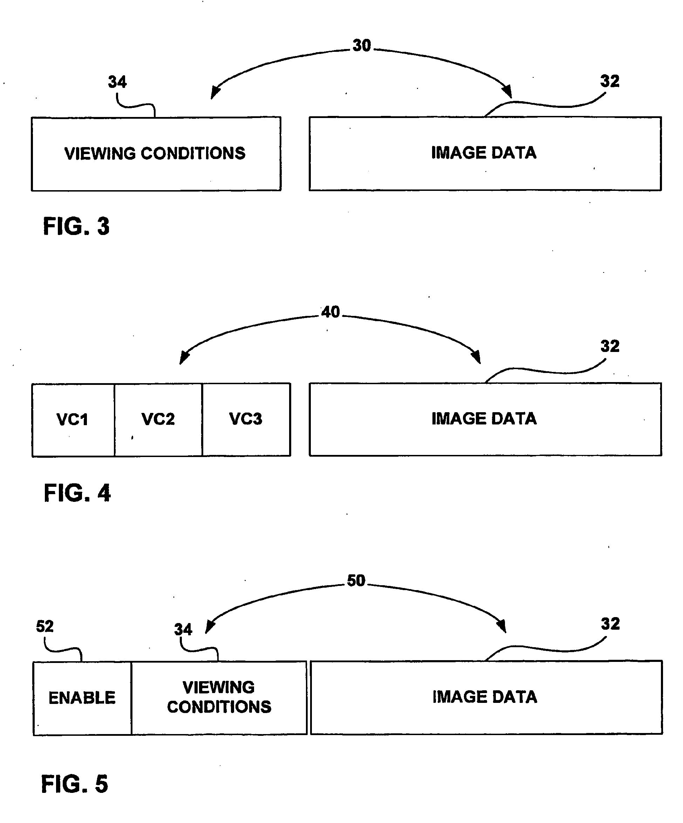

FIGS. 3-5 illustrate block diagrams of exemplary data structures that may be used to implement various aspects of the invention. Specifically, FIG. 3 illustrates a data structure 30 that includes image data 32 and data indicating viewing conditions 34. As described herein, viewing conditions 34 can be specified by an administrator to ensure that the images rendered using image data 32 will visually match the image prepared by the administrator.

Upon receiving image data 32 and viewing conditions 34, viewing stations 12 may be unable to render the image until the viewing conditions have been met Viewing stations 12 may, for example, be unable to render the image until viewing stations 12 have been recalibrated by a measurement device known to support calibration of viewing station 12 to less than or equal to a maximum magnitude of error. More details of some specific implementations of viewing stations 12 are described below.

Data structure 30 can be realized in a number of different formats. For example, in one embodiment, data structure 30 comprises a single image file that includes both image data 32 and the administrator-specified viewing conditions 34. In that case, only the image file may need to be served from administrative computer 10 to viewing stations 12. For example, the image file may include the image data 32, with the viewing conditions stored as annotations, headers, or footers to the image file.

In another embodiment, data structure 30 can be realized as one or more data files stored independently of the image file. In that case, image data 32 and viewing conditions may comprise separate data files that are associated with one another in a database. For example, various database techniques can provide the ability to store "meta data" files associated with one or more image files. Data structure 30 may be easily implemented using such a database technique. In that case, image data 32 would have an associated meta data file that includes the viewing conditions 34.

These files, then, can be served to a viewing station 12 together so that viewing station 12 receives the necessary data to display the image. Additionally, a "meta data" file may be associated with a folder of data files. In that case, viewing conditions may be selected for all images in the folder associated with the "meta data" file by setting the viewing conditions in that "meta data" file.

In another exemplary embodiment, data structure 30 can be associated with the processing parameters of a data file. In that case, image data 32 can be the data file and viewing conditions 34 can be included with the processing parameters. For example, Adobe Postscript^{™} interpreter software may provide the ability to specify processing parameters, conventionally used to indicate the desired resolution or size of the image processed by a raster image processor.

The invention can be implemented by storing the viewing conditions 34 with the process parameters as described above. Furthermore, U.S. Patent Application Publication 20020180997, entitled "Embedding Color Profiles in Raster Image Data Using Data Hiding Techniques," describes a technique of embedding color data within raster image data using the art of steganography. Accordingly, data structure 30 may even comprise raster image data with the viewing conditions embedded therein as described in above-referenced publication 20020180997.

In another embodiment, data structure 30 may comprise an image file in which viewing conditions 34 are embodied as part of an algorithm stored within data structure 30. In that case, access to image data 32 may be restricted by the image file itself, unless the viewing conditions have been met. For example, data structure 30 may operate in a manner analogous to conventional password protected files. However, rather than prompting a user for a password, data structure 30 may instruct the reviewer or software associated with viewing station 12 to check the viewing conditions.

For example, viewing station 12 may automatically instruct a user to calibrate the display device using a certified measurement device when the display device has not been calibrated within the maximum amount of time, e.g., within the last day, week, or several weeks, depending on the level of care to be applied to ensure accuracy for a particular image. Accordingly, this viewing condition requires recent calibration of viewing station 12, so that device drift or other changes are less likely to adversely affect color uniformity.

In FIG. 4, data structure 40 includes a number of distinct viewing conditions (VC1, VC2 and VC3). These parameters are subject to a wide variety of possible implementations. In one embodiment, the viewing conditions include calibration conditions such as a maximum time since the last calibration by a measurement device known to support calibration of viewing station 12 to less than or equal to a maximum magnitude of error or a specific calibration procedure that must be applied.

For example, if a viewing condition is chosen by the administrator to specify a maximum time X (e.g., in minutes, hours, days or weeks) since the last calibration of the display device by a measurement device known to support calibration of viewing station 12 to less than or equal to a maximum magnitude of error, viewing station 12 may restrict access to the image if the time since last calibration of the display device associated with viewing station 12 is greater than X. In order for a soft proof to be viewed remotely, the remote system must be calibrated with a certified measurement device as described herein.

Viewing station 12 may instruct the user to perform calibration on the display device, e.g., using measurement device 15, in order to view the image. This measurement device 15 can be provided and certified by the provider of the soft proofing system 2. Certification is ensured by the soft proofing system 2 by querying the measurement device 15, e.g., via a network connection, to obtain a unique serial number or other identifier associated with the measurement device, and then confirming that this identifier pertains to a certified measurement device, e.g., by consulting a data file, database, or document listing identifiers of certified measurement devices.

In some embodiments, an individual viewing station 12 may receive a unique identifier associated with a measurement device 15 coupled to the viewing station, and then query a data file or database containing unique identifiers associated with certified measurement devices. The data file or database may be stored locally with each viewing station 12, and updated periodically by administrative computer 10.

Alternatively, each viewing station 12 may remotely access a data file or database stored and maintained by administrative computer 10. As a further alternative, each viewing station 12 may simply send the identifier for a measurement device 15 to administrative computer 10 by network communication, in which case the administrative computer 10 consults a data file or database, and sends to the viewing station a reply indicating whether or not the measurement device is certified for use in soft proofing system 2. In each case, viewing station 12 retrieves a unique identifier match to verify that the measurement device 15 is certified.

The user may proceed to view an image at viewing station 12 only if the viewing conditions such as calibration time and measurement device certification are satisfied. By restricting viewing unless calibration has occurred within a maximum time X, the administrator can ensure that significant drift has not occurred in the display device at viewing station 12. If drift has occurred, the performance of a calibration procedure will account for the drift accordingly.

In this manner, more controlled and more uniform output across viewing stations 12 can be achieved. If the viewing condition is not satisfied, the user may be restricted from viewing an image on the viewing station, or must view the image without a guarantee of image accuracy. For example, the user may be presented with a message indicating that the image is not suitable for color critical viewing or, alternatively, not receive a message indicating that the image is suitable for color critical viewing.

Also, if a viewing-condition is chosen by the administrator to specify a particular calibration procedure, that calibration procedure must be applied in order to view the image at viewing station 12. In some cases, for color-critical images such as contract proofs, the viewing conditions may require viewing station 12 to be calibrated immediately prior to viewing, without regard to the time since last calibration. This calibration can account for any drift that may have occurred in the display device at viewing station 12 since the last calibration using measurement device 15.

In the cases where calibrating measurement device 15 via built-in calibration methods is adequate, the soft-proofing system 2 may include a means of confirming that measurement device 15 is certified. This can either be ensured by identifying a serial number or other identifier of the certified measurement device 15 during system installation or by providing access to a list or database, which continually updates the current list of certified measurement devices along with their serial numbers and date of calibration.

The built-in calibration methods of measurement device 15, however, may not always be adequate. In this case, software external to measurement device 15 may be desirable to ensure adequate calibration of the display device associated with a viewing station 12, as will be described. In addition to ensuring adequate calibration, the external software can be used as a means of certification. The external software transmits an error message to administrative computer 10 or viewing station 12 within soft proofing system 2 if the wrong measurement device is connected to a viewing station. The external software may run on viewing station 12 and verifies the identity of a measurement device 15, e.g., by reference to a unique identifier associated with the measurement device. This approach has the dual purpose of confirming certification of the measurement device coupled to a viewing station 12 while preventing a mismatch between a specific measurement device and the corrections for the measurement device contained in the correction software.

Again, the administrator may specify a variety of other viewing conditions in addition to the calibration and measurement device conditions. Another possible viewing condition, for example, is a warm-up time for a display device. In that case, if a viewing condition is chosen by the administrator to specify a minimum warm-up time for the display device, viewing station 12 may be unable to render the image until the display device has adequately warmed up, i.e. following power up. Display devices often take a significant amount of time to warm up, and do not reach a steady viewing state until adequately warmed up. Thus, by ensuring that the display device has been adequately warmed up, a more uniform rendition of the image can be achieved across different viewing stations 12.

Other possible viewing conditions may relate to such things as external lighting surrounding a given viewing station 12, for purposes of ensuring uniform illuminant conditions, or any other possible parameter that can affect the appearance of an image rendered at one or more viewing stations 12. For example, if external lighting is one of the viewing conditions, a user may be required to calibrate the external lighting prior to viewing the image in order to ensure proper illuminant conditions.

U.S. Patent Application Publication 20020180750, entitled "Display System," describes a display device having an associated illuminant condition sensor that senses illuminant conditions surrounding the display device. If the display device has an illuminant condition sensor, the viewing software may automatically cause the illuminant condition sensor to measure illuminant conditions. Accordingly, the image may be rendered at viewing station 12 only if the illuminant conditions are acceptable, or alternatively, the image may be adjusted to account for differences in illuminant conditions. This too can ensure that images rendered at different viewing stations 12 will look visually equivalent.

Another viewing condition that can be chosen by the administrator may include sharpening to be applied at the rendering device. For example, sharpening may improve color accuracy. In some cases, the viewing condition may specify a specific sharpening technique. For example, a technique that dynamically adjusts both scaling of the size of an image and the sharpening to be applied to that image may be specified as a viewing condition. In this manner, improved color accuracy may be achieved. U.S. Patent Application Publication No. 20020171855, entitled "AUTOMATED SHARPENING OF IMAGES FOR SOFT PROOFING," describes possible sharpening techniques that may be specified as a viewing condition.

In FIG. 5, data structure 50 includes an enable field 52. The enable field 52 can be particularly useful if the administrator desires to send one or more images that do not require a high level of color accuracy. Thus, enable field 52 can be used by an -administrator to enable or disable the operation of the viewing conditions 34. If an image is sent that does not require attention to a high level of color accuracy, the viewing conditions 34 may be disabled by the appropriate selection of field 52. In that case, viewing station 12 may still be able to display the image even if the viewing conditions have not been met. Alternatively, each particular viewing condition may include its own enable field. In that case, an administrator may selectively enable only particular viewing conditions as desired.

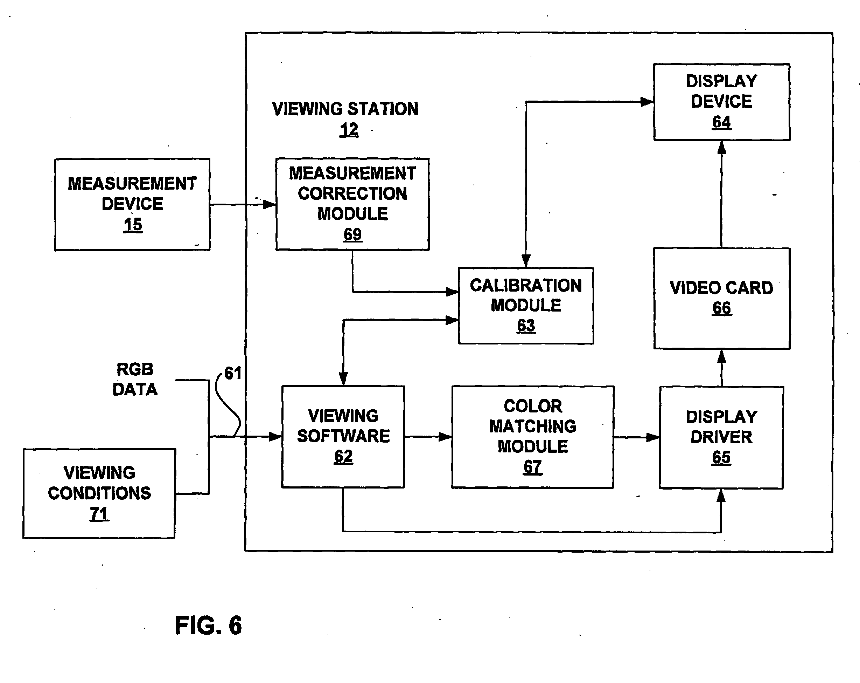

FIG. 6 is a block diagram of one exemplary implementation of a viewing station 12 according to the invention. As indicated by reference numeral 61, viewing station 12 receives RGB image data as well as viewing conditions 71 specified by an administrator. Numeral 61 indicates the reception of viewing conditions 71, e.g., in the form of a data structure as illustrated and described above with reference to FIGS. 3-5.

Viewing station 12 may include various components that can be implemented in software or hardware. As illustrated in FIG. 6, viewing station 12 includes viewing software 62, color matching module 67, display driver 65, video card 66 and display device 64. In addition, viewing station 12 includes calibration module 63 for calibrating the display device. Calibration module 63 may receive color measurements from a measurement device 15, via measurement correction module 69. As described above, measurement device 15 may be a stand-alone device or include a software component, such as a driver, that runs on viewing station 12.

By way of example, the operation of viewing station 12 will now be described where the viewing conditions are calibration conditions that specify a maximum time since the last calibration by a certified measurement device 15. Upon receiving RGB image data as well as viewing conditions 71 that specify a maximum time X since last calibration by a certified measurement device 15, viewing software 62 queries calibration module 63 to determine the last time calibration was performed.

Calibration module 63 includes a calibration algorithm for performing calibration of display device 64. Calibration module 63 may adjust drive values or a device profile associated with the display device 64 to ensure uniform color output. The adjustments may be based on color output measurements made by measurement device 15. Although illustrated as a separate module, calibration module 63 may be an integrated feature of a color management system.

In some embodiments, the color-management-system may form part of the operating system of viewing station 12. Any calibration technique may be used in accordance with the invention. Indeed, the actual calibration process used may depend on a number of factors including the type of display devices implemented in viewing stations 12. Nevertheless, high quality calibration techniques are preferred because they may result in improved color accuracy.

As one example, U.S. Patent Application Publication No. 20030125892, entitled "Calibration Techniques for Imaging Devices," describes an acceptable calibration process. Briefly, the calibration process involves characterizing the imaging device (in this case a cathode ray tube) with a device model such that an average error between expected outputs determined from the device model and measured outputs of the imaging device is on the order of an expected error, and adjusting image rendering on the imaging device to achieve a target behavior.

In this manner, the device model may achieve a balance between expected output and measured results. A correction can then be applied at the video card level to achieve a specified target behavior, i.e., RGB gamma values of approximately 2.2. This correction implementing a balance between expected output and measurement can result in average color errors of less than 0.75 ΔE.

The calibration method referenced above assumes the existence of an accurate measurement device. Comparisons of measurements made by inexpensive measurement devices with measurement made by precise measurement instrumentation (which is generally too bulky and expensive for use in a soft proofing system environment) indicate two typical sources of error in the inexpensive measurement device. The first error in inexpensive measurement devices pertains to measurement of intense colors including R, G, B, and white (i.e., R=G=B=255). Typically, one finds errors of L*, a*, and b* of 1 ΔE to 6 ΔE between the measurement device used in the soft proofing system and the high precision "reference" measurement device provided by the precise measurement instrumentation. The value of the reference white values (X_{N}Y_{N}Z_{N}) used in the equations for L*a*b* can either be standard D50 or visual D50, meaning the value of X_{N}Y_{N}Z_{N}) on the display device 64 that visually matches an illuminant that is spectrally similar to standard D50 illumination.

The second major source of error in inexpensive measurement devices is non-linearity. For example, if a measurement device were perfectly linear with respect to a high precision reference measurement device, values of chromaticity xy that were constant at different intensities of color as measured by one measurement device would remain constant as measured by the reference measurement device. Likewise, values of L*a*b* would be nearly identical for the measurement device and for the reference measurement device for all white, gray, and black displayed colors if the value of reference white (X_{N}Y_{N}Z_{N}) for each measurement device was equated to the XYZ values of white (R=G=B=255).

However, since in fact the linearity of inexpensive measurement devices are less than perfect, in reality one often finds errors exceeding 1 ΔE at various intensities of light, even after accounting for shifts in the measured value of white. Some measurement devices have errors in the vicinity of light gray, while others demonstrate errors in the vicinity of dark gray. Fortunately, inexpensive measurement devices from several manufacturers have the characteristic of error in the white region, or in linearity, or both, that is significant but nonetheless very repeatable. In other words, there seems to exist systematic, repeatable error that is unique for each measurement device, but which does not vary over time and is therefore very correctable.

For simplicity, it is always desirable to place corrections into the measurement device itself for maximum portability as the measurement device is used by different software applications. Whenever possible, the soft proofing system 2 described herein should include a measurement device 15 that has been calibrated to the best of its capability with the tools supplied by the device manufacturer.

As a specific example, the Matchprint Virtual Proofing System measures a visual D50 white on a CRT (indicative of the population of CRTs used in the system) with the inexpensive measurement device provided by the system, e.g., a DTP92 colorimeter manufactured by X-Rite Corp. of Grandville, Michigan, and with a high precision PR650 telespectroradiometer manufactured by PhotoResearch of Chatsworth, California. Hence, the DTP92 colorimeter is an example of an inexpensive measurement device 15 as described herein, whereas the PR650 telespectroradiometer is an example of a high precision "reference" measurement device to which the measurement device 15 is compared.

Procedures prescribed by X-Rite Corp. are followed to ensure that the colorimeter-based measurement device measures the same value for white at a specific location on the CRT as is measured by the reference PR650 telespectroradiometer. The consistency of measurements obtained by multiple PR650 devices appears to be accurate to a small fraction of 1 ΔE, especially after correcting for slight differences in white measurement

By contrast, after the prescribed optimization procedures are performed, the DTP92 colorimeter still demonstrates errors from measurement device to measurement device ranging from 0.5 ΔE to 2.5 ΔE at various locations along the gray scale between black and white, even after correcting for small differences in white measurement. These errors are caused by systematic non-linearity in the inexpensive measurement device 15. The soft proofing system 2 can correct for these remaining errors by mapping the uncorrected measured values of X, Y, and Z to corrected values of X, Y, and Z as measured by the reference PR650 telespectroradiometer. If the error is smooth in nature as a function of intensity, a smooth mathematical expression can be used in the software to correct the error.

For example, as further shown in FIG. 6, viewing station 12 may include a measurement correction module 69, which may be implemented as software running as a separate process or as part of a color management process within viewing station 12E. In general, measurement correction module 69 corrects measurement data received from measurement device 15 to correct the remaining errors that may exist. In this manner, measurement correction module 69 stands between measurement device 15 and calibration module 63 to correct measurement information obtained from measurement device 15 before that information is supplied to calibration module 63. This is particularly useful when the built-in calibration of measurement device 15 is unable to adequately calibrate viewing station 12 to a desired calibration state, e.g., due to the non-linearities in the inexpensive measurement device as described above.

Measurement correction module 69 corrects systematic white-gray errors and/or non-linearity in the output obtained from measurement device 15. Ideally, measurement correction module 69 corrects the measurement device error down to the level of random noise. The magnitude of this correction is such that the maximum magnitude error is reduced from 1-2 ΔE down to typically less than approximately 0.5 ΔE. Again, measurement correction module 69 may correct the errors by mapping measured values of X, Y and Z obtained from measurement device 15 to corrected values of X, Y, and Z for use by calibration module 63. If the error is non-smooth in characteristic, a generic look up table method can be used where each uncorrected input value is mapped to a corrected output value. For example, three look up tables can be employed, one each for the X, Y, and Z measurements.

It should be noted that different manufacturers have different methods for calibrating their measurement devices with regard to the absence of light, i.e., black. The resulting measured values ofXYZ for R=B=G=0 on the display device 64 may be slightly different for each type of measurement device. When correcting a measurement device 15 relative to a high precision reference device, this slight difference in "black point" should be taken into account.

One way to accomplish this objective with respect to the slight difference in black point is to ensure that a correction bias (X₀Y₀Z₀) is added to or subtracted from the corrected data from measurement device 15 in order to ensure that the measured value of XYZ at R=G=B=0 is nearly identical for the corrected data from measurement device 15 and the high precision reference device. The black bias correction (X₀Y₀Z₀) can be constant or can be scaled by a factor ranging from 100% to 0% as the measurement varies from near black to near white, depending on the particular properties of the specific measurement device 15 relative to the reference device.

Regardless, of the specific calibration process that is implemented, calibration module 63 stores a record (or time-stamp) of the most recent calibration process. Thus, viewing software 62 can simply interact with calibration module 63 or a record created by calibration module 63 to access the time-stamp and thereby determine whether the last calibration process was performed within the administrator-specified maximum time X since the most recent calibration.

If not, viewing software 62 can instruct the user accordingly. In other words, if the viewing conditions have not been met, viewing software 62 can cause instruction messages to be displayed. The instruction message can be provided to display driver 65, which in turn can provide the necessary signals to video card 66 so that display device 64 renders a message to the user, informing the user that the image cannot be displayed due to the lack of a sufficient recent calibration, and possibly instructing-the user to calibrate the display-using measurement device 15 in order to satisfy the viewing condition and thereby view the image.

Alternatively, if viewing software 62 determines that the last calibration process was performed within the administrator-specified maximum time X, viewing software 62 can authorize or otherwise allow the image to be viewed. In that case, viewing software 62 passes the RGB data to color matching module 67. Color matching module 67 converts the RGB data to R'G'B' data using a dynamic color profile for display 64, i.e., a destination device profile.

Color matching module 67 uses the calibration information provided by calibration module 63 to dynamically generate an accurate color profile for display 64. Thus, the device profile is dynamic in the sense that it is modified in response to the calibration process. The converted R'G'B' data can then be sent to display driver 65 and video card 66 to ultimately drive the pixels of display 64 in a manner that yields a more accurate rendition of the color images.

Even if viewing software 62 verifies that the most recent calibration process was performed within the maximum time X, viewing software may be further configured to determine whether measurement device 15 is certified. This determination may be made as a threshold inquiry prior to verifying the time of the most recent calibration process, or following verification of the most recent calibration process. In either case, viewing station 12 compares a unique identifier associated with measurement device 15 to a list of unique identifiers associated with measurement devices that have been certified and are known to support calibration of viewing station 12 to less than or equal to a maximum magnitude of error. The list of unique identifiers may be provided by the administrator, and may represent not only measurement devices 15 that are certified from the standpoint of general accuracy, but also individual measurement devices that have been recently calibrated. If a measurement device 15 has not been recently calibrated, the administrator may remove it from the list of certified measurement devices. With these steps, viewing software 62 verifies that calibration of the display device 64 associated with viewing station 12 was performed recently, and that calibration was performed by an accurate measurement device 15, thereby promoting the accuracy and uniformity of the color image viewed by the user of the viewing station.

Viewing software 62 can be realized with-web browser software or any image viewing software such as software implementing a GIF, TIFF, or JPEG viewer. Viewing software 62 may incorporate the Adobe Acrobat viewing software, or a web browser such as Netscape Navigator, Windows Explorer, Opera, or any other web browser. In one embodiment, viewing software 62 may include conventional web browser software, with a browser plug-in programmed to perform the nonconventional viewing authorization and viewing restriction techniques described herein. Hence, the viewing authorization and viewing restriction techniques may be embodied as an addition to conventional viewing software, and can be easily added as a plug-in.

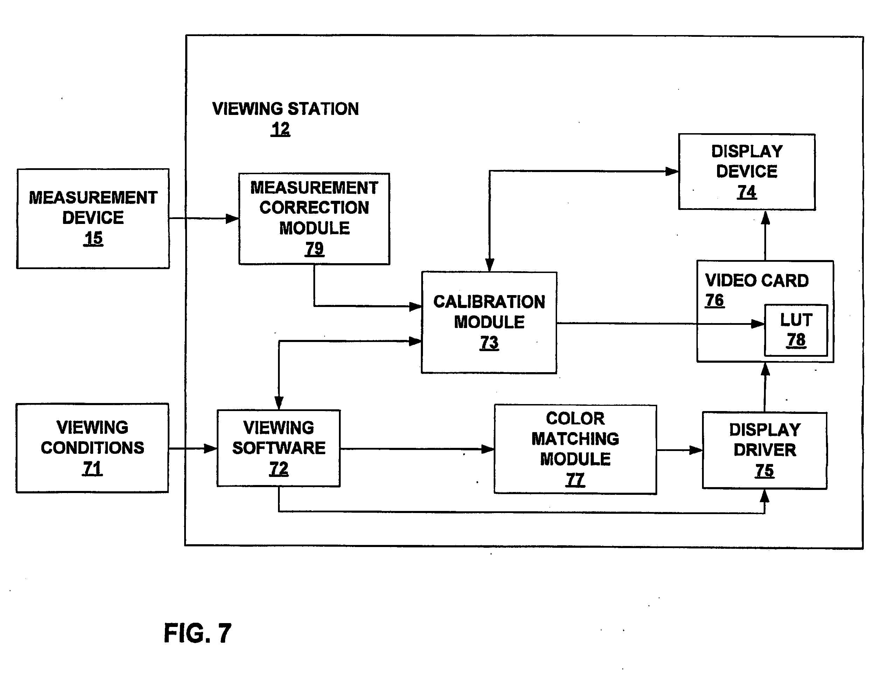

FIG. 7 illustrates another viewing station 12. Viewing software 72 operates in manner substantially similar to viewing software 62 illustrated in FIG. 6. However, in the embodiment of FIG. 7, color matching module 77 applies a static color profile of display device 74 that does not account for calibration measurements determined by calibration module 73. Rather, in FIG. 7, the calibration measurements are used to modify entries in a look-up table (LUT 78) that is stored on video card 76. Hence, while viewing station 12 relies on static destination device profile for display device 74 in software, calibration-based corrections are achieved via video card 76 by modifications to LUT 78.

The measurement output of measurement device 15 may be corrected by measurement correction module 79 before the measurement output is processed by calibration module 73. Thus, once viewing software 72 authorizes the viewing of an image, it is fed through color matching module 77 to convert the RGB data using a static color profile of display device 74. The color data can then be sent through display driver 75 and into video card 76.

Within video card 76, the color data may be applied to LUT 78 to adjust the color data according to calibration information provided by calibration module 73. Video card 76 can then drive the pixels of display 74 in a manner that yields a very accurate rendition of color images. As in the example of FIG. 6, calibration module 73 may be responsive to color output measurements made by measurement device 15. Also, as in the example of FIG. 6, measurement correction module 79 is provided to correct the information generated by measurement device 15 and thereby correct systematic white point and gray balance error or non linearity in measurement device 15.

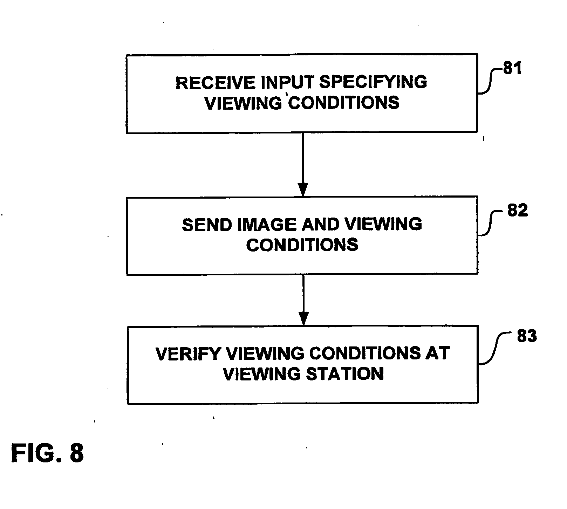

FIG. 8 is a flow diagram illustrating a technique that can be implemented in a soft proofing system, e.g., soft proofing system 2 of FIG. 1. As shown in FIG. 8, administrative computer 10 (FIG. 1) receives input specifying one or more viewing conditions (81). For example, an administrator can simply enter or choose the desired viewing conditions for a given image or a collection of images. The image and the viewing conditions can then be sent from administrative computer 10 to one or more viewing stations 12 (82). The viewing conditions may be integrated within image files sent by administrative computer 10 or sent independently of the image files. For example, administrative computer 10 may serve images either automatically or in response to requests from one or more viewing stations 12 via a network connection. Prior to presenting the image to a user at a viewing station 12, the satisfaction of the viewing conditions is verified (83).

In another embodiment, the administrator may set viewing conditions for one or more folders on the network drive. In that case, the folder to which the viewing conditions apply is called a "hot folder." Any time an image is served to a viewing station 12 from the hot folder, the viewing conditions for that hot folder may also be served. In this manner, the administrator may have more control over viewing conditions for a collection of images stored in the folder.

Moreover, after setting viewing conditions for the hot folder, an administrator may not be required to reenter the viewing conditions for images created or added to the system at a later date. Rather, the administrator can simply add the new image to the hot folder. In that case, the viewing conditions for the hot folder can apply to the newly added image, without requiring the administrator to reenter the viewing conditions. This can save time, and allow viewing conditions to be set in a uniform manner across several images. The hot folder may also be accessible only by particular users, or at particular viewing stations. In that case, one or more user identifications or viewing station identifications may comprise a viewing condition that can be chosen by the administrator.

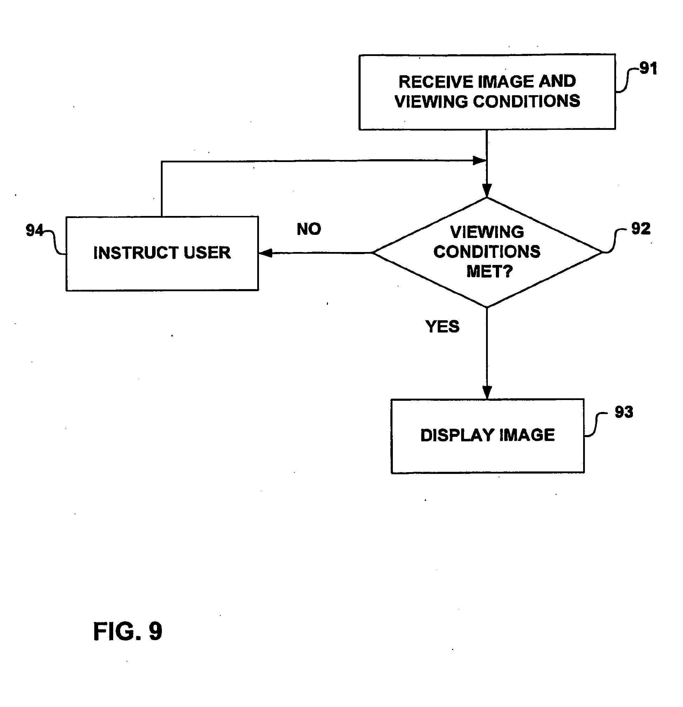

FIG. 9 is another flow diagram according to the invention. After administrative computer 10 has sent the image and viewing conditions, viewing station 12 receives the image and viewing conditions (91). Viewing station 12 then checks to determine whether the viewing conditions have been met (92) at the viewing station 12. If so, the image can be displayed (93), and thereby presented to the user for proofing purposes. If not, the user may be instructed (94) that the viewing conditions are not satisfied. The instructions may include instructions to place viewing station 12 in a state in which the viewing conditions are satisfied, e.g., by calibration. To determine whether the viewing conditions have been met, the viewing station 12 may query time stamps in system 2 or check one or more viewing conditions or timing associated with the viewing conditions, such as the time since last calibration or the time since the display device was turned on. In addition, viewing station 12 may determine whether a certified measurement device has been used for the calibration.

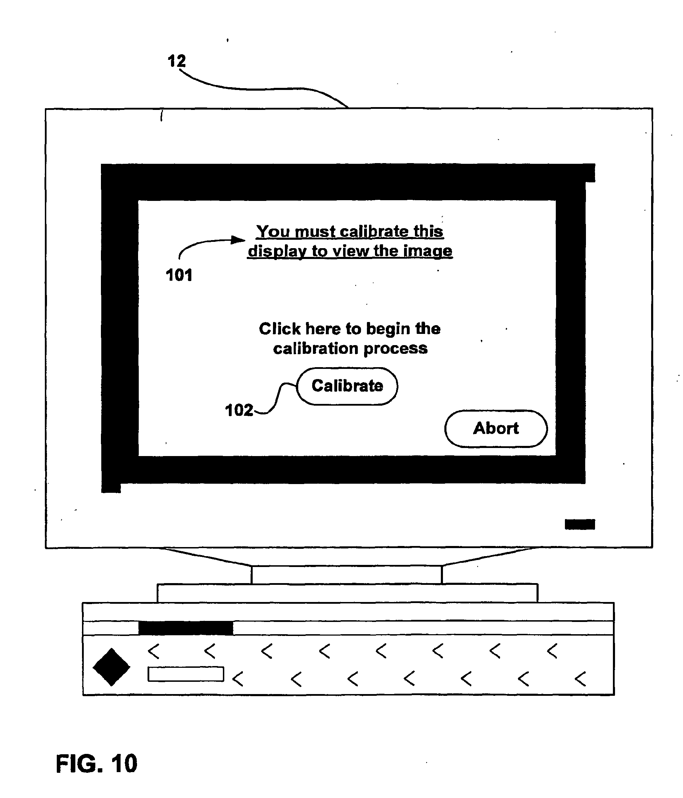

FIG. 10 illustrates one exemplary instruction screen that can be displayed at viewing station 12 in the event that the display has not been calibrated within an acceptable amount of time. In particular, the instruction screen may display an indication 101 to the user that the image cannot be displayed. In addition, the instruction screen may also indicate corrective measures that the user can take in order to view the image. In that case, the user may be instructed to initiate a calibration process in order to view the image simply by clicking the calibrate icon 102.

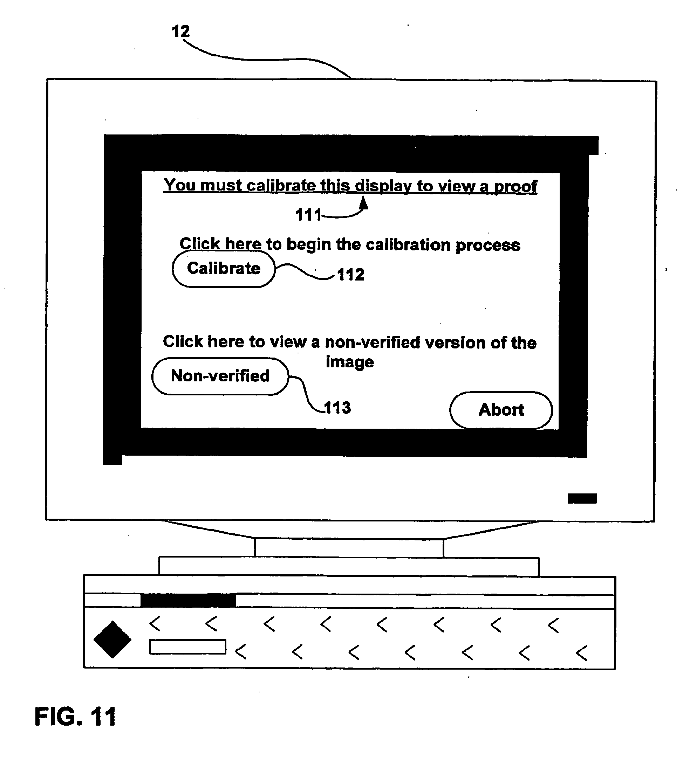

FIG. 11 illustrates another exemplary instruction screen that can be displayed at viewing station 12 in the event that the display has not been calibrated within an acceptable amount of time. Again, the instruction screen may display an indication 111 to the user that the image cannot be displayed, along with instructions for corrective measures that the user can take in order to view the image, such as an instruction to click the calibrate icon 112 in order to initiate a calibration routine.

In addition, the instruction screen may allow the user to view a non-verified version of the image, e.g., by clicking the non-verified icon 113. In that case, the user may view the image even though the calibration process was not performed within the time frame specified by the administrator. However, the non-verified rendition of the image may be conspicuously labeled as such, and the ability of the user to annotate or provide feedback regarding the image may be limited or restricted.

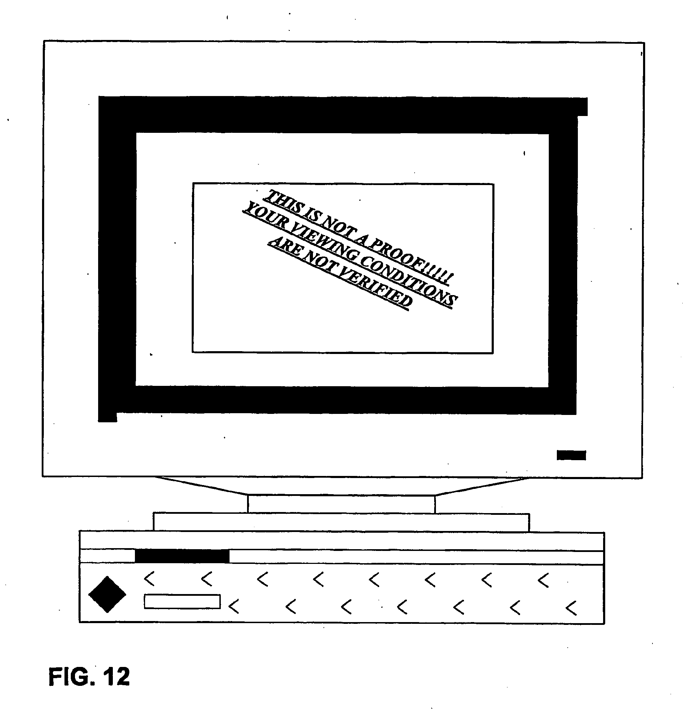

If users are allowed to annotate the non-verified image, the annotations may be conspicuously labeled as coming from a user that viewed a non-verified image. In that case, viewing software 12 may cause annotations to appear accordingly. For example, Adobe Acrobat viewing software allows annotations to be labeled according to the source of the annotations. Thus, the annotations are additions to the image file. In accordance with the invention, the viewing software may add annotations in the form of additions to the image file that indicate that the annotations come from a user that viewed a non-verified image. FIG. 12 illustrates an exemplary view of a display screen that can be displayed in response to the user's selection of the non-verified icon 113.

As mentioned above, the viewing conditions are subject to a wide variation of possible variations. One example is a warm-up condition. In that case, the ability to view an image may be restricted if the display has not been adequately warmed up. In some cases, one or more viewing conditions can be automatically specified in the viewing software loaded on viewing stations 12. In that case, an administrator would not even need to specify the viewing conditions. Rather, viewing software would automatically check the viewing conditions prior to authorizing viewing of an image. For example, in some systems, it may be advantageous to require a user to calibrate the display device prior to viewing. In that case, calibration parameters may be automatically specified in the viewing condition software. Until the display device is calibrated, the ability to view the image may be restricted whether or not the administrator specified calibration informations as part of the viewing conditions.

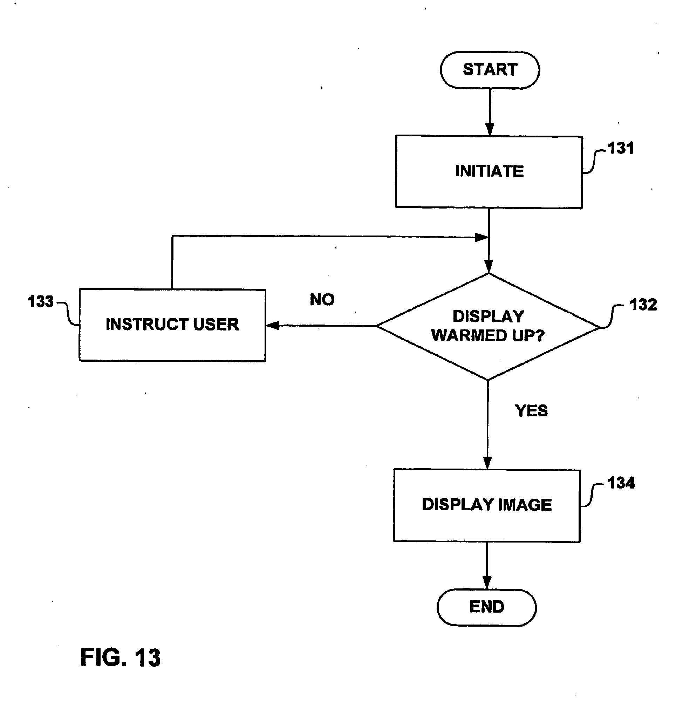

FIG. 13 illustrates a soft proofing technique wherein a viewing condition is an automatic feature of viewing condition software. In that case, an administrator would not need to specify the condition. Rather, the viewing software at the viewing station would automatically check the condition. Although FIG. 13 illustrates a warm-up condition as being automatic feature of the viewing software, other viewing conditions, including calibration conditions could also be specified in the software so that an administrator would not need to specify the conditions.

As shown in FIG. 13, a user at a viewing station 12 initiates the viewing of a soft proof (131). For example, initiation may take place when a user requests an image file from administrative computer 10, e.g., from a network folder. Viewing condition software on viewing station 12 determines whether a display device at viewing station 12 has been adequately warmed up (132). For example, the display device may initiate a time stamp upon being turned on, or alternatively, the display device may be coupled to the same power source as a CPU at the viewing station.

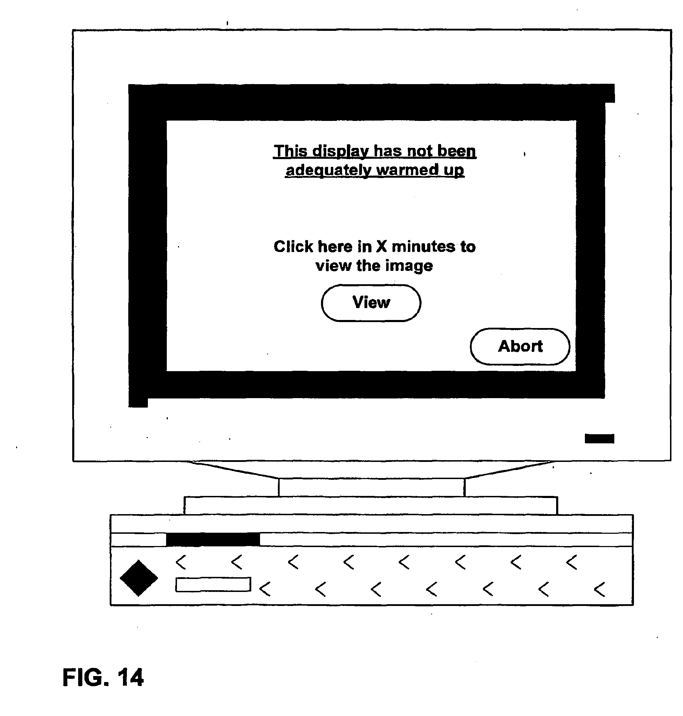

In the latter case, a time stamp of the CPU indicating when it was last turned on may be used to identify when the display device was last turned on. If the display device has not been adequately warmed up, the user is instructed as such, and viewing rights may be temporarily restricted (133). FIG. 14 illustrates an example display screen that a user may encounter when a display has not been adequately warmed-up. Referring again to FIG. 13, if the display has been warmed up, the viewing software may direct viewing station 12 to display the image (134).

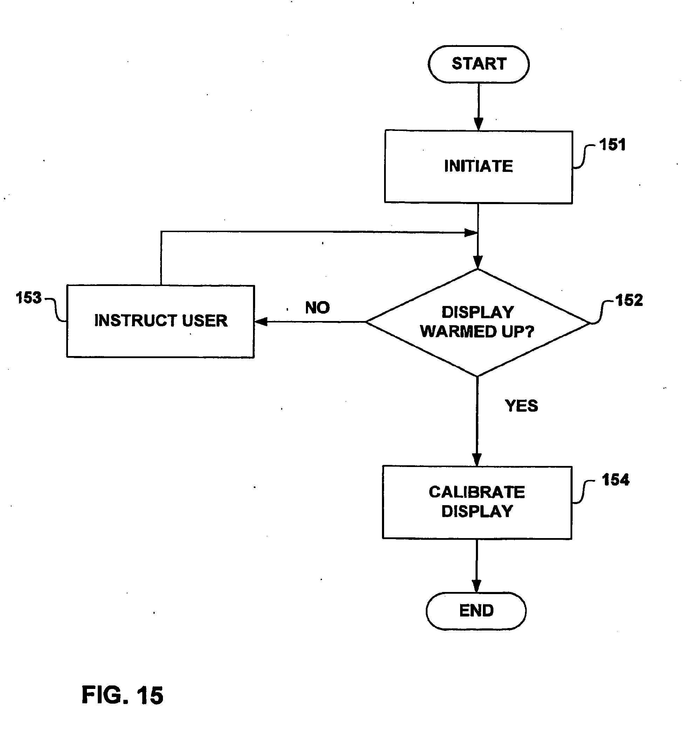

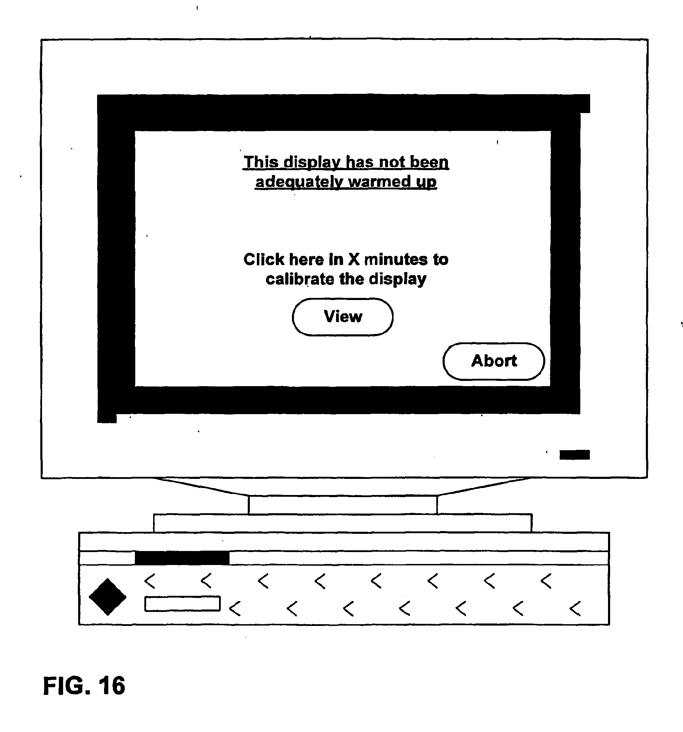

FIG. 15 illustrates a combined technique. In particular, the technique of FIG. 15 recognizes that calibration of a display device should not occur until the display has been adequately warmed up, and thus reached a steady viewing state. Therefore, upon initiation of a calibration process (151), viewing software determines whether the display has been adequately warmed up (152). If not, the user is instructed that the display has not been adequately warmed up (153). FIG. 16 illustrates one example of such an instruction to the user. However, if the display has been warmed up, then the calibration process may be performed (154). The information obtained by measurement device 15 for use in the calibration process may be corrected to correct systematic whitepoint error, gray point error and non-linearity, as described above with reference to FIGS. 6 and 7.

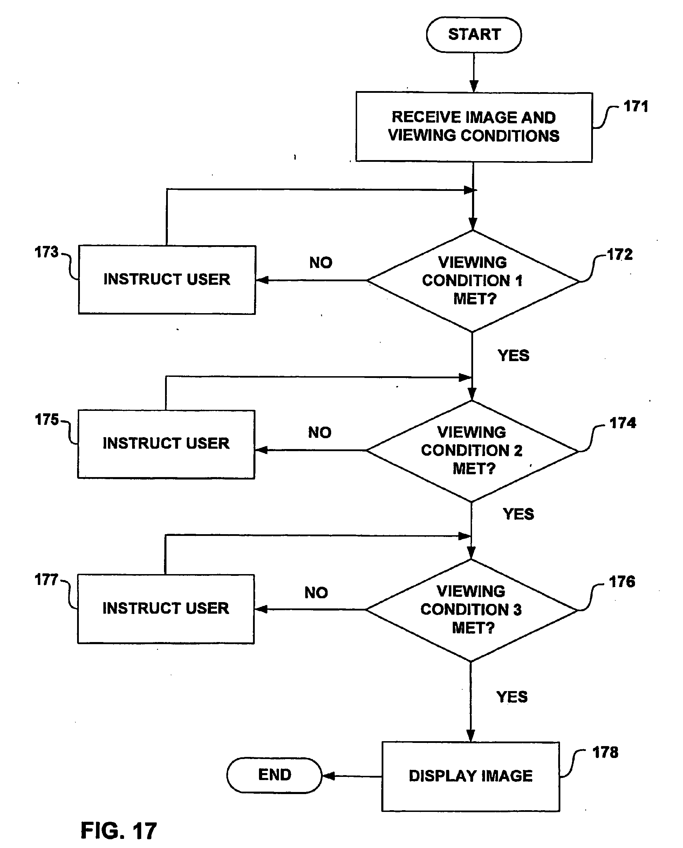

FIG. 17 is another flow diagram according to the invention. As shown, viewing station 12 receives an image and viewing conditions (171). Viewing station 12 determines whether a first viewing condition has been satisfied (172). If not, a user at viewing station 12 is instructed (173). If so, viewing station 12 proceeds to determine whether a second viewing condition has been satisfied (174). Again, if the condition has not been satisfied, the user at viewing station 12 is instructed (175). Once both the first and second viewing conditions have been satisfied, viewing station 12 proceeds to determine whether a third viewing condition has been satisfied (176), and instructs the user in the event that third condition has not been satisfied (177).

This process may continue for any number of viewing conditions. Alternatively, every viewing condition may be checked substantially simultaneously at viewing station 12. In either case, once all of the viewing conditions have been satisfied, viewing station 12 displays the image (178). A user at viewing station 12 can then review the image, and possibly provide feedback by annotating the image and returning the annotated version of the image to administrative computer 10. As described in detail above, the viewing conditions may include viewing station calibration conditions as well as other viewing conditions.

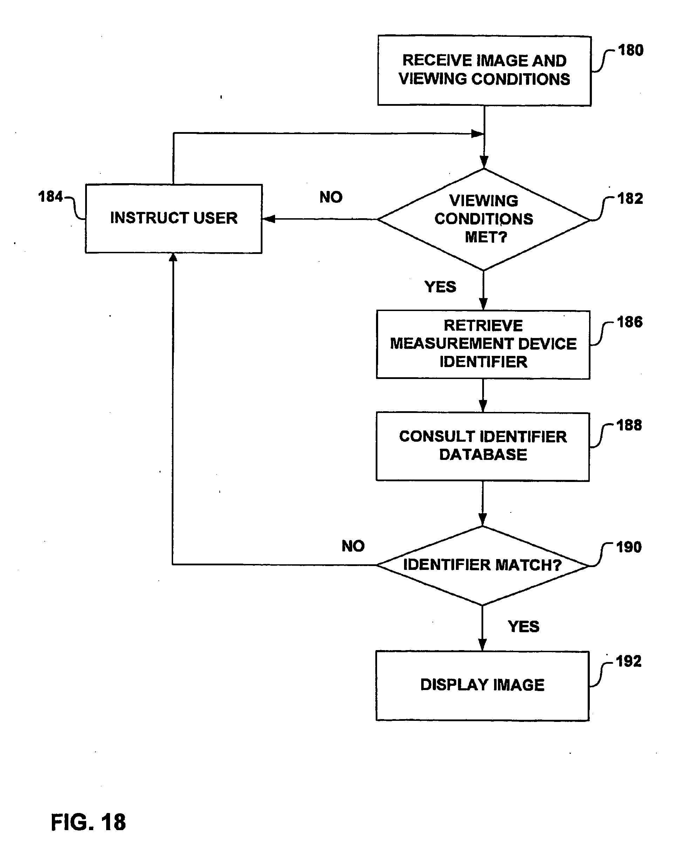

FIG. 18 is a flow diagram illustrating another soft proofing technique according to the invention, in which the technique verifies the use of a certified measurement device to calibrate a viewing station. As shown in FIG. 18, after administrative computer 10 has sent the image and viewing conditions, viewing station 12 receives them (180). Viewing station 12 then checks to determine whether the viewing conditions have been met (182). If not, the user may be instructed that the viewing conditions have not been met and that the image will not be displayed (184). The user may be further instructed on what to do in order to satisfy those viewing conditions. To determine whether the viewing conditions have been met, viewing station 12 may query time stamps in the system, or check one or more viewing conditions or timing associated with the viewing conditions, such as the time since last calibration or the time since the display device was turned on.

In addition, as a further viewing condition, viewing station 12 may verify that the measurement device used for calibration is a certified measurement device. As described above, a certified measurement device is one which is known to support calibration of viewing station 12 to less than or equal to a maximum magnitude of error. An administrator of soft proofing system 2 may generate a list of certified measurement devices and unique identifiers to individually identify each measurement device, so that recent calibration and resultant accuracy of the measurement devices can be ensured.

The administrator may update the list on a regular basis to certify new measurement devices, re-certify measurement devices that pass calibration, and de-certify measurement devices that do not pass calibration or have not been recently calibrated. In particular, as further shown in FIG. 18, viewing station 12 may retrieve a unique identifier (186) from the measurement device, consult an identifier database containing a list of identifiers for certified measurement devices (188), and then determine whether the retrieved identifier matches one of the identifiers in the database (190).

If so, viewing station 112 proceeds to display the image (192). If not, viewing station 12 instructs the user that the image will not be displayed because the measurement device is not certified and further instructs the user to calibrate the display using a certified measurement device (184). In this manner, viewing station 12 is configured to verify not only that the viewing station is in a calibration state required by the viewing conditions, but also that the calibration state was achieved by a certified measurement device to ensure greater calibration accuracy.

A number of techniques and embodiments of the invention have been described. The techniques may be implemented in software, hardware, firmware or any combination of hardware, software and firmware. If implemented in software, the techniques may be embodied in program code initially stored on a computer-readable medium such as a hard drive or magnetic, optical, magneto-optic, phase-change, or other disk or tape media. For example, the program code can be loaded into memory and then executed in a processor. Alternatively, the program code may be loaded into memory from electronic computer-readable media such as EEPROM, or downloaded over a network connection. If downloaded, the program code may be initially embedded in a carrier wave or otherwise transmitted on an electromagnetic signal. The program code may be embodied as a feature in a program providing a wide range of functionality.

If the invention is implemented in program code, the processor that executes the program code may take the form of a microprocessor and can be integrated with or form part of a PC, Macintosh, computer workstation, a hand-held computer, or any other computer. The memory may include random access memory (RAM) storing program code that is accessed and executed by a processor to carry out the various techniques described above.

Exemplary hardware implementations may include implementations within a DSP, an application specific integrated circuit (ASIC), a field programmable gate array (FPGA), a programmable logic device, specifically designed hardware components, or any combination thereof.

Although various aspects of the invention have been described in the context of providing accurate measurement in a soft proofing system that includes an administrator and a number of viewing stations, various aspects of the invention are not necessarily limited in that respect. For instance, a number of the techniques described herein may be implemented in a stand-alone computer, or a network of interconnected computers that does not have a specified administrator. In those cases, the raster image processing and CMYK to RGB conversions may be performed locally rather than by an administrator. Also, although many aspects of the invention have been described in a system that implements CRT displays, the invention is readily applicable to systems that implement other types of displays including liquid crystal displays (LCDs), plasma displays, and the like.

Other features are included below:

The system wherein the viewing station automatically instructs a user to calibrate the display device using the measurement device when the display device has not been calibrated within the maximum amount of time.

The system wherein the viewing station obtains a unique identifier from the measurement device, and verifies that the measurement device is a certified measurement device based on the unique identifier.

The system wherein the viewing station accesses a list of unique identifiers associated with certified measurement devices, and the viewing station consults the list to verify that the measurement device is a certified measurement device based on the unique identifier obtained from the measurement device and the list of unique identifiers.

The system wherein the viewing station restricts display of the image when any of the viewing conditions are not satisfied.

The system wherein the maximum magnitude of error of the measurement device is determined relative to a reference measurement device, the measurement device includes a colorimeter, and the reference measurement device includes a telespectroradiometer.

The method of further comprising instructing a user to calibrate the display device when the display device has not been calibrated using the measurement device within the maximum amount of time.

The method wherein the maximum magnitude of error of the measurement device is determined relative to a reference measurement device, the measurements device includes a colorimeter and the reference measurement device includes a telespectroradiometer.

A computer-readable medium comprising instructions to cause a processor to perform the method of calibrating a viewing station using a measurement device; and
restricting display of an image on the viewing station when one or more viewing conditions are not satisfied,
wherein the viewing conditions include a condition that the measurement device is a measurement device known to support calibration of the viewing station to less than or equal to a maximum magnitude of error.

## Claims

1. A soft proofing system (2) comprising:
a viewing station (12) that displays an image subject to one or more viewing conditions for the image; and
a measurement device (15) that calibrates the viewing station,
wherein the viewing conditions include a condition that the measurement device is known to support calibration of the viewing station to less than or equal to a maximum magnitude of error so as to ensure that the measurement device is calibrated in accordance with the requirements of a certified measurement device manufacturer;
wherein, after said calibration is performed, said proofing system is adapted to correct data from said measurement device to compensate for systemic errors in the measurement device relative to a reference device; and
the proofing system is adapted to correct the data from said measurement device by automatically detecting a serial number of the measurement device and applying a previously determined correction for the measurement device.

2. The system of claim 1, wherein the viewing conditions comprise calibration information indicating a required calibration state of a display device associated with the viewing station, the calibration state of the display device being achieved via the measurement device.

3. The system of claim 1, wherein the viewing conditions comprise calibration information that specifies a maximum amount of time since a display device associated with the viewing station was last calibrated using the measurement device.

4. The system of claim 1, wherein the viewing conditions comprise warm-up information that cause the viewing station to restrict display of the image when a display device of the viewing station has not been turned on for at least a specified amount of time.

5. A method comprising:
calibrating a viewing station (12) using a measurement device (15); and
restricting display of an image on the viewing station when one or more viewing conditions are not satisfied,
wherein the viewing conditions include a condition that the measurement device is a measurement device known to support calibration of the viewing station to less than or equal to a maximum magnitude of error;
said method comprising correcting data from said measurement device to compensate for errors in the measurement device relative to a reference device; and
communicating with the measurement device to verify that the measurement device is a certified measurement device, obtaining a unique identifier from the measurement device, and verifying that the measurement device is a certified measurement device based on the unique identifier.

6. The method of claim 5, wherein the viewing conditions comprise calibration information that specify a maximum amount of time since a display device at the viewing station was last calibrated using the measurement device.

7. The method of claim 5, further comprising displaying the image only when the viewing conditions have been met and a viewing station has been turned on for at least a specified amount of time.

8. The method of claim 5, further comprising consulting a database to verify that the measurement device is a certified measurement device based on the unique identifier obtained from the measurement device and a list of unique identifiers stored in the database.

## Patentansprüche

1. Soft-Proofing-System (2) mit:
einer Betrachtungsstation (12), die einen Bildgegenstand unter einer oder mehreren Betrachtungsbedingungen für das Bild anzeigt; und
einer Messeinrichtung (15), welche die Betrachtungsstation kalibriert;
wobei die Betrachtungsbedingungen eine Bedingung umfassen, bei der die Messeinrichtung die Kalibrierung der Betrachtungsstation bis hin zu einem Wert unterstützt, der geringer ist als eine maximale Fehlergröße oder dieser entspricht, um zu gewährleisten, dass die Messeinrichtung gemäß den Erfordernissen eines zertifizierten Messgeräteherstellers kalibriert ist;
und wobei nach Ausführung der Kalibrierung das Proofing-System von der Messeinrichtung gelieferte Daten korrigieren kann, um einen Ausgleich zu schaffen für systematische Fehler der Messeinrichtung bezüglich einer Referenzeinrichtung; und
wobei das Proofing-System die von der Messeinrichtung stammenden Daten korrigieren kann durch automatisches Erkennen einer Seriennummer der Messeinrichtung und durch Anwenden einer zuvor bestimmten Korrektur der Messeinrichtung.

2. System nach Anspruch 1, worin die Betrachtungsbedingungen Kalibrierungsinformationen enthalten, die einen erforderlichen Kalibrierungszustand einer der Betrachtungsstation zugeordneten Anzeigeeinrichtung angeben, wobei der Kalibrierungszustand der Anzeigeeinrichtung durch die Messeinrichtung erreicht wird.

3. System nach Anspruch 1, worin die Betrachtungsbedingungen Kalibrierungsinformationen enthalten, die einen maximalen Zeitwert angeben, seitdem eine der Betrachtungsstation zugeordnete Anzeigeeinrichtung zuletzt mit Hilfe der Messeinrichtung kalibriert wurde.

4. System nach Anspruch 1, worin die Betrachtungsbedingungen Aufwärminformationen umfassen, die bewirken, dass die Betrachtungsstation die Anzeige des Bildes einschränkt, wenn eine Anzeigeeinrichtung der Betrachtungsstation mindestens eine bestimmte Zeit lang nicht eingeschaltet war.

5. Verfahren mit den Schritten:
Kalibrieren einer Betrachtungsstation (12) unter Verwendung einer Messeinrichtung (15); und
Einschränken der Anzeige eines Bildes an der Betrachtungsstation, wenn eine oder mehrere Betrachtungsbedingungen nicht erfiillt sind;
worin die Betrachtungsbedingungen eine Bedingung umfassen, dass es sich bei der Messeinrichtung um eine Messeinrichtung handelt, welche die Kalibrierung der Betrachtungsstation bis hin zu einem Wert unterstützt, der geringer ist als eine maximale Fehlergröße oder dieser entspricht;
worin das Verfahren das Korrigieren von Daten umfasst, die von der Messeinrichtung stammen, um Fehler der Messeinrichtung bezüglich einer Referenzeinrichtung auszugleichen; und
das Kommunizieren mit der Messeinrichtung, um zu überprüfen, ob es sich bei der Messeinrichtung um eine zertifizierte Messeinrichtung handelt, das Erhalten einer eindeutigen Kennung von der Messeinrichtung und das Überprüfen, ob es sich bei der Messeinrichtung um eine zertifizierte Messeinrichtung handelt, basierend auf der eindeutigen Kennung.

6. Verfahren nach Anspruch 5, worin die Betrachtungsbedingungen Kalibrierungsinformationen enthalten, die einen maximalen Zeitwert angeben, seitdem eine der Betrachtungsstation zugeordnete Anzeigeeinrichtung zuletzt mit Hilfe der Messeinrichtung kalibriert wurde.

7. Verfahren nach Anspruch 5, mit dem Schritt des Anzeigens des Bildes nur dann, wenn die Betrachtungsbedingungen erfiillt sind und eine Betrachtungsstation mindestens eine bestimmte Zeit lang eingeschaltet war.

8. Verfahren nach Anspruch 5, mit dem Schritt des Abfragens einer Datenbank zum Überprüfen, ob es sich bei der Messeinrichtung um eine zertifizierte Messeinrichtung handelt, basierend auf der eindeutigen Kennung, die von der Messeinrichtung erhalten wird, und auf einer Liste eindeutiger Kennungen, die in der Datenbank gespeichert sind.

## Revendications

1. Système d'épreuvage à l'écran (2) comprenant :
une station de visualisation (12) qui affiche un sujet d'image dans une ou plusieurs conditions de visualisation pour l'image ; et
un dispositif de mesure (15) qui étalonne la station de visualisation,
dans lequel les conditions de visualisation incluent la condition que le dispositif de mesure soit connu pour supporter l'étalonnage de la station de visualisation jusqu'à une valeur inférieure ou égale à une grandeur maximale d'erreur afin de s'assurer que le dispositif de mesure soit étalonné conformément aux exigences d'un fabricant de dispositifs de mesure certifiés ;
dans lequel, après la réalisation dudit étalonnage, ledit système d'épreuvage à l'écran est adapté pour corriger les données transmises par ledit dispositif de mesure afin de compenser les erreurs systémiques dans le dispositif de mesure par rapport à un dispositif de référence ; et
le système d'épreuvage est adapté pour corriger les données transmises par ledit dispositif de mesure en détectant automatiquement un numéro de série du dispositif de mesure et en appliquant une correction préalablement déterminée pour le dispositif de mesure.

2. Système selon la revendication 1, dans lequel les conditions de visualisation comprennent des informations d'étalonnage indiquant l'état d'étalonnage requis d'un dispositif d'affichage associé à la station de visualisation, l'état d'étalonnage du dispositif d'affichage étant obtenu au moyen du dispositif de mesure.

3. Système selon la revendication 1, dans lequel les conditions de visualisation comprennent des informations d'étalonnage qui spécifient un laps de temps maximal depuis qu'un dispositif d'affichage associé à la station de visualisation a été étalonné pour la dernière fois en utilisant le dispositif de mesure.

4. Système selon la revendication 1, dans lequel les conditions de visualisation comprennent des informations de mise en température qui entraînent une limitation de l'affichage de l'image par la station de visualisation lorsqu'un dispositif d'affichage de la station de visualisation n'a pas été mis sous tension pendant au moins un laps de temps spécifié.

5. Procédé comprenant :
l'étalonnage d'une station de visualisation (12) en utilisant un dispositif de mesure (15) ; et
la limitation de l'affichage d'une image sur la station de visualisation lorsqu'une ou plusieurs conditions de visualisation ne sont pas satisfaites,
dans lequel les conditions de visualisation comprennent la condition que le dispositif de mesure soit un dispositif de mesure connu pour supporter l'étalonnage de la station de visualisation jusqu'à une valeur inférieure ou égale à une grandeur maximale d'erreur ;
ledit procédé comprenant la correction des données transmises par ledit dispositif de mesure pour compenser les erreurs dans le dispositif de mesure par rapport à un dispositif de référence ; et
la communication avec le dispositif de mesure pour vérifier que le dispositif de mesure est un dispositif de mesure certifié, en obtenant un identifiant unique du dispositif de mesure et en vérifiant, sur la base de l'identifiant unique, que le dispositif de mesure est un dispositif de mesure certifié.

6. Procédé selon la revendication 5, dans lequel les conditions de visualisation comprennent des informations d'étalonnage qui spécifient un laps de temps maximal depuis qu'un dispositif d'affichage au niveau de la station de visualisation a été étalonné pour la dernière fois en utilisant le dispositif de mesure.

7. Procédé selon la revendication 5, comprenant aussi l'affichage de l'image uniquement lorsque les conditions de visualisation ont été satisfaites et qu'une station de visualisation a été mise sous tension depuis au moins un laps de temps spécifié.

8. Procédé selon la revendication 5, comprenant aussi la consultation d'une base de données pour vérifier que le dispositif de mesure est un dispositif de mesure certifié en se basant sur l'identifiant unique obtenu à partir du dispositif de mesure et sur une liste d'identifiants uniques stockée dans la base de données.
